# EUROPEAN PATENT APPLICATION

(11) **EP 4 245 512 A1**
(43) Date of publication of application: **20.09.2023**
(21) Application number: 21856009.2
(22) Date of filing: 15.10.2021
(51) Int. Cl.: B30B 15/00, B29C 33/20, B29C 43/34, B29C 43/36

(54) **WRINKLE REMOVAL PLATE FOR USE IN PRESS MACHINE**

(30) Priority: 16.11.2020 JP 2020190008
(71) Applicant: The Mot Company, Ltd., Setagaya-ku, Tokyo 158-0087 (JP)
(72) Inventor: SAITO Tomoaki, Tokyo 146-0083 (JP); SHUTO Yasushi, Miura-gun, Kanagawa 240-0113 (JP)
(74) Representative: Wohlfahrt, Jan Günther
(86) International application number: PCT/JP2021/038234
(87) International publication number: WO 2022/034930

(57) **Abstract**

Provided is a wrinkle removal plate with which manufacturing accuracy can be maintained while significantly reducing costs. A wrinkle removal plate 3 for use in a press machine that molds a workpiece 4 into a drawn product having a desired shape by press molding that uses a pair of molds comprising a first mold 100 provided with a cavity 1 and a second mold 200 provided with a core 2, wherein the wrinkle removal plate 3 is positioned at corner parts, which are to be drawn, of the opposing surfaces of the cavity 1 and core 2, and is formed from a plurality of wrinkle removal parts 31, 32, 33, 34 that each have arms extending in two directions along the outer periphery of the corner parts.

## Description

### Technical Field

The present invention relates to a wrinkle-preventing board used for a press device for molding a workpiece into a drawn article having a desired shape by press molding.

### Background Art

A pair of an upper die and a lower die, which comprises a first die (also referred to as "concave die") having a cavity and a second die (also referred to as "convex die") having a core (the punch), is generally used for the drawing using the press device.

The drawing is widely conducted for a press molding using a fiber-reinforced resin (what is called FRP) as a workpiece as well as a conventional press molding using a metal board (a blank or a work) as a workpiece.

When the workpiece is a fiber-reinforced resin, the intermediate material (prepreg) in a semi-cured state which is obtained by soaking the reinforcing fiber materials such as glass fiber and carbon fiber with thermosetting resins or thermoplastic resins such as epoxy resin, phenol resin and polyester resin is generally used. The desired processed articles are manufactured by heating and pressing the prepregs by a press device.

In drawing of the fiber-reinforced resin with the press device, as a core enters a cavity, the reinforcing fiber material is drawn into a drawing space that is a gap between the cavity and the core.

The reinforcing fiber material is remarkably drawn at the corner parts of the processed article. At the corner parts, the shapeless tensile strain is locally generated in the reinforcing fiber material and the distance between the reinforcing fibers expands and shrinks, and then the density of the reinforcing fiber material changes and the resin is unevenly distributed. The wrinkles are generated on the side wall and the like of the processed article, and the fibers break in some cases. These cause the variation from place to place in the strength of the processed articles, the faults such as the decline of the entire strength, the quality degradation of the molded article and the occurrence of the defective products.

To prevent the generation of the faults, the workpiece holding tool named "the wrinkle-preventing board" conventionally has been used. The wrinkle-preventing board is a frame-like board, which is a shape of picture-frame, corresponding to the inner periphery of the workpiece (the workpiece is expected to be the prepreg hereinafter) and also has a function as a blank holder holding the workpiece at the prescribed position of the die.

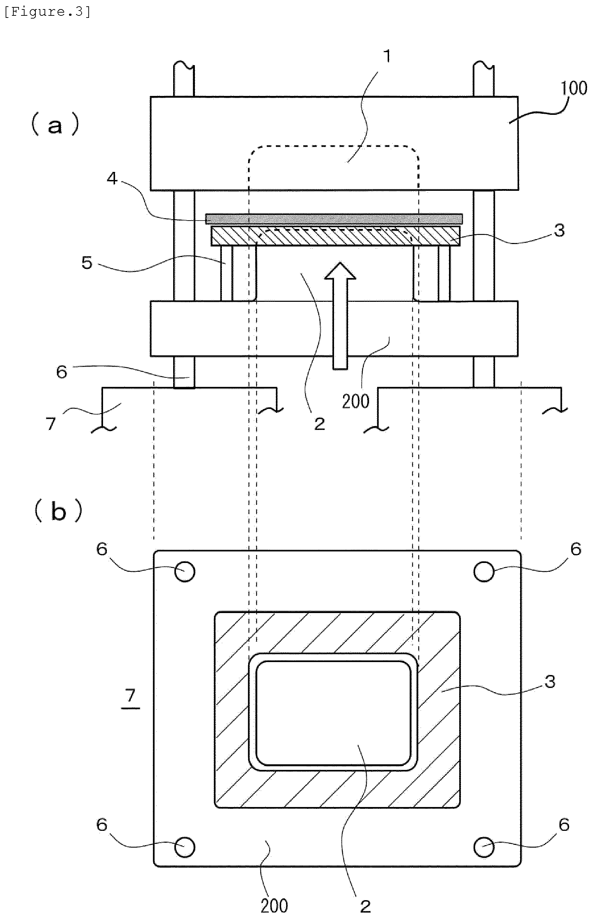

Fig.3 is a schematic diagram illustrating an example of the conventional drawing device. Fig.3 (a) is a side view of the drawing device including the first die 100 having the cavity 1 and the second die 200 having the core 2, and Fig.3 (b) is a plan view illustrating the main parts of the second die 200 seen from above without the first die 100 and the workpiece 4 illustrated in Fig.3 (a).

This drawing device including a pair of the dies described above which is able to draw the prepreg used as the workpiece 4 is performed by raising the second die 200 for the core to enter the cavity 1 of the first die 100.

The wrinkle-preventing board 3 is set around the outer periphery of the core 2 of the second die 200.

The drawing device shown in Fig.3 is fixed on the device stand 7 (base of press device) and the core 2 of the second die 200 is pressed into the cavity 1 of the first die 100 by raising the second die 200 to the first die 100. The drawing device having a pair of the dies that are inverted each other is also available.

As shown in a plan view is shown in Fig.3 (b), the wrinkle-preventing board 3 is a picture frame-like board and is set so that it can be raised and lowered around the outer periphery of the core 2 of the second die 200. The wrinkle-preventing board 3 generally is a board of the metal similar to the metal of the dies.

In drawing, the workpiece 4, which is for example a prepreg, is put on the wrinkle-preventing board 3 (the state shown in Fig.3 (a)). The wrinkle-preventing board 3 can be raised and lowered by the telescopic member 5. The wrinkle-preventing board 3 is raised before or with raising the second die 200, and the workpiece 4 is sandwiched between the lower surface of the first die 100 and the upper surface (the facing surface) of the second die 200.

Next, by further raising the second die 200 in the direction of the big arrow by the pressurizing mechanism 6 and pressing the core 2 into the cavity 1, the workpiece 4 is drawn into the prescribed shape.

The wrinkle-preventing board 3 is a tool for holding and positioning the workpiece 4, but mainly has a function to let the inner periphery part of the workpiece 4 properly move between the cavity 1 and the core 2 in the step drawing the workpiece 4 and to prevent the generation of the wrinkles which are generated mainly on the side wall and the break due to the reduction of the thickness in drawing.

There are many non-patent documents disclosing the conventional technique relating to such wrinkle-preventing bord as well as patent documents such as Patent Document 1 and Patent Document 2.

Patent Document 1 discloses a press molding device comprising the upper die having the concave part (cavity), the lower die having the convex part (core) and the wrinkle-preventing board arranged around the outer periphery of the lower die and a method of the press molding for the fiber-reinforced composite material molded article.

Patent Document 2 discloses a method and a general-purpose press device having a concave die (corresponding to an upper die named a die aforementioned), a convex die (corresponding to a lower die named a punch aforementioned) and a wrinkle-preventing board, which prevents the generation of the wrinkles and the break of the molded articles in the drawing process of board material by injecting high-pressure liquid into the upper die.

### Citation List

### Patent Document

Patent Document 1: JP 6,587,771 B
Patent Document 2: JP H07-144234 A

### Summary of Invention

### Technical Problem

As described in Patent Documents described above, the wrinkle-preventing board (also named the wrinkles suppressing board) used for the drawing device generally consist of the picture frame-like single board which surrounds the outer periphery of the core of the convex die and has an opening.

As shown in Fig.3 (b), the shape of the die in a plan view (the shapes on the plane where the upper die faces the lower die) is generally rectangular. The wrinkle-preventing board used for the rectangular die is also a rectangular shape surrounding the outer periphery of the core of the convex die and corresponding to the surface shape of the rectangular die.

In drawing process, at the drawn part where the concave part (the cavity) is combined with the convex part (the core) at the corner parts, the reinforcing fibers are easily drawn and consequently, the faults such as the uneven distribution of the fibers, the break of the fibers and the reduction of the thickness of the resin layer are particularly easily generated.

The main function of the wrinkle-preventing board is to prevent the workpiece from being drawn too much and to let the workpiece be drawn properly, which is one of the purposes of use of the wrinkle-preventing board.

The conventional wrinkle-preventing boards of the picture frame-like single board are manufactured by punching out from the wide board material. Because the manufacturing accuracy affects the quality of the drawn articles, the cut surface finishing and the finishings such as ensuring the flatness are required.

Generally, finishing work for the board having a shape like this and a large size is more difficult as compared with the board of the small size.

Because such picture frame-like member is taken out from a material very inefficiently, there are a large quantity of the waste part and the cost is very high. The wrinkle-preventing board is one of the factors preventing the manufacturing cost of the processed articles from reducing.

One of the purposes of the present invention is to provide a wrinkle-preventing board capable of accomplishing the substantial cost reduction while keeping the manufacturing accuracy equivalent to that of the conventional wrinkle-preventing board described above.

### Solution to Problem

To achieve the purpose, the wrinkle-preventing board of the present invention is characterized by including more than one wrinkle-preventing board pieces instead of a single member.

The typical structure of the present invention is as described below. Hereinafter, each component is described together with the codes in the Example to understand the present invention easily, but the present invention is not limited to the structure referenced with the codes.

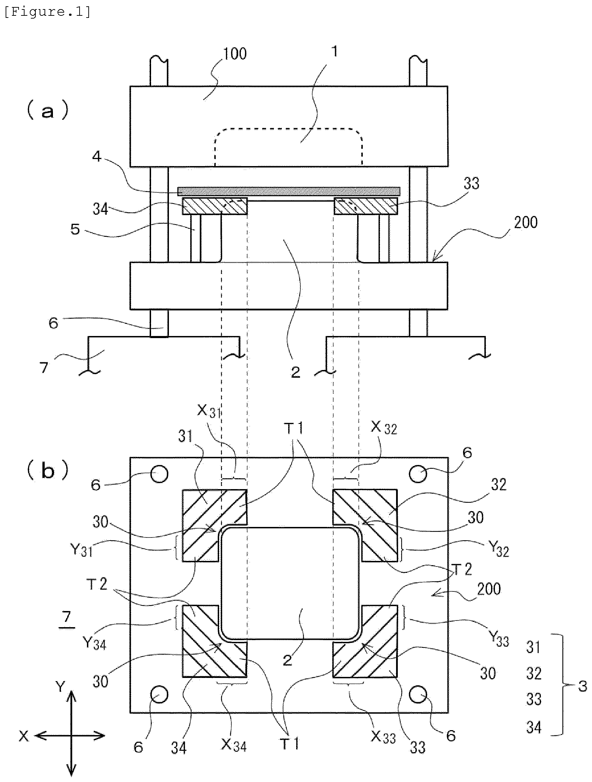

One of embodiments of the present invention is related to the wrinkle-preventing board 3 used for a press device that molds a workpiece 4 into a drawn article having a desired shape by press molding with a pair of upper and lower dies comprising a first die 100 having a cavity 1 and a second die 200 having a core 2 and has the structures described below.
(1) The wrinkle-preventing board 3 includes more than one wrinkle-preventing board pieces 31 to 34 each having a pair of arms extending in two directions perpendicular to each other and being set along the outer periphery of each corner where the drawing is performed.
(2) Regarding the wrinkle-preventing board pieces 31 to 34 of the wrinkle-preventing board 3, the lengths of the arms extending in two directions perpendicular to each other along the outer periphery are the same within the area of the surface of the die. Namely, in the plan view in Fig.1 (b), X₃₁, X₃₂, X₃₃, X₃₄, Y₃₁, Y₃₂, Y₃₃ and Y₃₄ satisfy the relationship "X₃₁=X₃₂=X₃₃=X₃₄=Y₃₁=Y₃₂=Y₃₃=Y₃₄" in the wrinkle-preventing board pieces 31 to 34 on all of four corners, wherein "X₃₁, X₃₂, X₃₃ and X₃₄" are the lengths of the arms extending in the X-axis direction of the wrinkle-preventing board pieces 31 to 34 and "Y₃₁, Y₃₂, Y₃₃ and Y₃₄" are the lengths of the arms extending in the Y-axis direction of the wrinkle-preventing board pieces 31 to 34 respectively. Note that X₃₁, X₃₂, X₃₃, X₃₄, Y₃₁, Y₃₂, Y₃₃ and Y₃₄ may satisfy the relationship "(X₃₁=X₃₂=X₃₃=X₃₄) ≠ (Y₃₁=Y₃₂=Y₃₃=Y₃₄)".
(3) One or both arms of a pair of arms extending in two directions perpendicular to each other along the outer periphery of at least one of more than one wrinkle-preventing board pieces 31 to 34 of the wrinkle-preventing board 3 positioned at the corner parts have a length different from that of the other wrinkle-preventing board pieces within the area of the surface of the die.
(4) at least one wrinkle-preventing board pieces 31 to 34 of the wrinkle-preventing board 3 is set so that the pressure for holding the workpiece 4 with the first die 100 of a pair of the dies and the wrinkle-preventing board pieces 31 to 34 can be adjusted individually.

It goes without saying that the present invention is not restrictively interpreted based on the above structure and the structure of Example described in the embodiment described below and that the various modifications are possible as long as the modifications do not deviate from the technical concept of the present invention.

### Advantageous Effects of Invention

According to the structure (1) aforementioned, the wrinkle-preventing board 3 can be manufactured at low cost and prevents the workpiece from drawing too much. Thus, by preventing the uneven distribution of the fibers, the break of the fibers and the reduction of the thickness of the resin layer, the generation of the wrinkles and break (the splits and the cracks of the molded article) can be suppressed.

For example, when the workpiece is metal, the corner formed by molding has a shape that the thickness becomes thinner due to the spreadability of metal. Because the metal is reduced at the corner and the metal of the reduction amount is added to the other part, the metal board waves due to the metal added. As a result, the waving material (the uneven material) cannot be drawn into the dies. Consequently, when the workpiece is metal, the wrinkle-preventing board is desirably provided surrounding the outer periphery of the core (360°, whole circumference) so that the unevenness cannot be generated on the processed article. When the workpiece is made of a fiber-reinforced resin (CFRP), because only the corner is formed in the state that the fibers come together evenly, the problems relating to the wave are generated only at limited areas that are the corner and the areas around the corners. The workpiece rarely waves at the other parts except for the corner area. Consequently, the wrinkle-preventing board needs not to be provided surrounding the outer periphery of the core. The wrinkle-preventing board is preferably arranged only at the four parts near the corner, because the workpiece is not pressed overmuch and the fiber-reinforced resin molded article with high accuracy is easily obtained.

According to the structure (2) aforementioned, when the workpiece is drawn at all the corner parts in the same way and when the workpiece is three-dimensionally drawn at all the corner parts at almost the same degree, the wrinkle-preventing board of the structure (2) is preferably used. The wrinkle-preventing board piece need not to be selected for each corner part and the setting of the wrinkle-preventing board is easy and quick.

The wrinkle-preventing board of the structure (3) aforementioned is suitable for manufacturing a processed article having a different corner shape from the other corner shape, or different depth of corner from the depth of the other corner.

When the above processed article having the different conner shape is manufactured by drawing, the wrinkle-preventing board pieces having a pair of arms extending in two directions perpendicular to each other one of which has a length different from that of the other prepared in advance are selected to put on the press device according to the prediction of the drawn amount of the workpiece (or the result of the simulation).

By selecting the wrinkle-preventing board pieces having a pair of arms one of which has a length different from that of the other, the quality of the drawn article can be improved.

In addition, by using the wrinkle-preventing board of the structure (4) aforementioned, the holding force of each wrinkle-preventing board piece can be optimized according to the thickness of the workpiece (the prepreg) and the difference of the shape. As a result, the probability of the generation of the wrinkles and the splits can be further reduced.

### Brief description of the drawings

[Fig.1] Fig.1 is a schematic diagram illustrating the drawing device using the wrinkle-preventing board of Example 1.
[Fig.2] Fig.2 is a schematic diagram illustrating the drawing device using the wrinkle-preventing board of Example 2.
[Fig.3] Fig.3 is a schematic diagram illustrating an example of the known drawing device.

### Form to Carry Out Invention

Embodiments of the present invention are described below by referencing the drawings of Example in detail.

### Example 1

Fig.1 is a schematic diagram illustrating the drawing device to which Example 1 of the wrinkle-preventing board used for the press device of the present invention is applied. Fig.1 (a) is a side view of the drawing device including the first die 100 having the cavity 1 and the second die 200 having the core 2. Fig.1 (b) is a plan view illustrating the main parts of the second die 200 seen from above without the first die 100 and the workpiece 4 in Fig.1 (a).

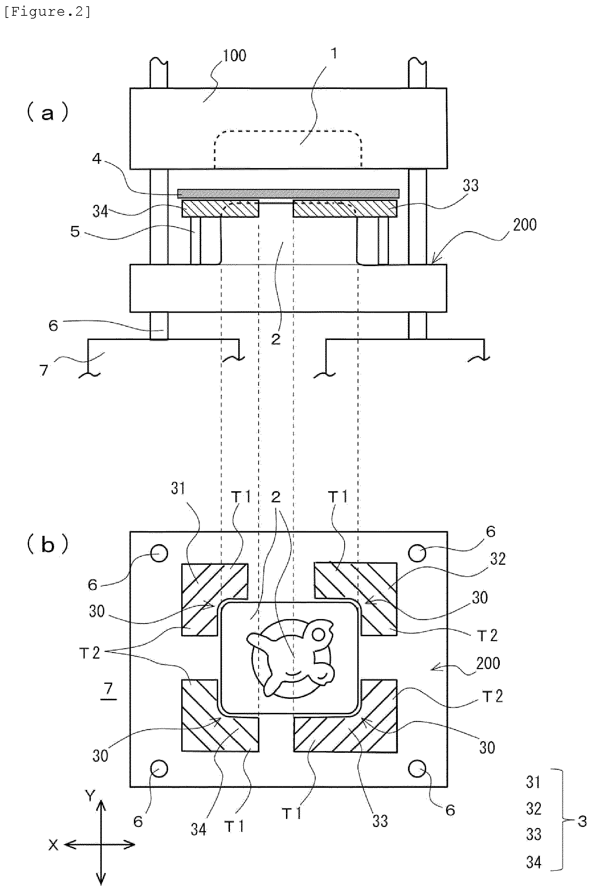

As seen in a drawing device illustrated in Fig.3, this drawing device of Fig.1 and Fig.2 including a pair of the dies and performs drawing of a prepreg used as a workpiece 4 by raising the core 2 of the second die 200 so as to enter the cavity 1 of the first die 100.

In Example 1, along the outer periphery of the core 2 of the second die 2, the wrinkle-preventing board pieces 31, 32, 33 and 34 are set at each corner part 30 of the core 2. Namely, in Example 1, the wrinkle-preventing board 3 is constituted by a set of four L-shape wrinkle-preventing board pieces 31, 32, 33 and 34.

The planer shape of each of the wrinkle-preventing board pieces 31, 32, 33 and 34 is graphically identical or congruent. The shape allows the interchangeable use for each corner. In Fig.1, for being easily understandable, the wrinkle-preventing board is indicated by hatching coarsely. Because the process of the drawing is the same as that described by referencing Fig.3, the detailed description of the process is omitted.

The lengths of the arms extending in two directions perpendicular to each other (the arm extending in the X-axis direction is T1 and the arm extending in the Y-axis direction is T2) along the outer periphery aforementioned of more than one wrinkle-preventing board pieces 31 to 34 of the wrinkle-preventing board 3 are the same in within the area where a pair of dies faces each other on the corner part. In Fig.1 (b), X₃₁, X₃₂, X₃₃, X₃₄, Y₃₁, Y₃₂, Y₃₃ and Y₃₄ satisfy the relationship "X₃₁=X₃₂=X₃₃=X₃₄=Y₃₁=Y₃₂=Y₃₃=Y₃₄" in the wrinkle-preventing board pieces 31 to 34 on all of four corners, wherein "X₃₁, X₃₂, X₃₃ and X₃₄" are the lengths of the arms extending in the X-axis direction of the wrinkle-preventing board pieces 31 to 34 and "Y₃₁, Y₃₂, Y₃₃ and Y₃₄" are the lengths of the arms extending in the Y-axis direction of the wrinkle-preventing board pieces 31 to 34 respectively. Namely, because the selection need not to be made to determine which one of the wrinkle-preventing board pieces should be arranged for each of four corners, the setting can be easy and quick.

Note that when the size of the die in the X-axis direction is very different from the size of the die in the Y-axis direction, X₃₁, X₃₂, X₃₃, X₃₄, Y₃₁, Y₃₂, Y₃₃ and Y₃₄ may satisfy the relationship "(X₃₁=X₃₂=X₃₃=X₃₄) ≠ (Y₃₁=Y₃₂=Y₃₃=Y₃₄)". Also in this case, the wrinkle-preventing board pieces are easily set by determining the direction of the arms by visually observing the shape.

Each of the wrinkle-preventing board pieces 31, 32, 33 and 34 can be raised and lowered by the telescopic member 5, for example, spring mechanism. Just before the start of raising the second die 200 with the workpiece 4 thereon, the wrinkle-preventing board pieces hold the workpiece 4 on the lower surface of the first die 100, that is, between the lower surface of the first die 100 and the surface of the second die 200 facing the first die 100, which is the same as the wrinkle-preventing board in Fig.3.

Note that because the holding pressure exerted by the telescopic member 5 can be adjusted, the optimal holding force can be set in accordance with the shape and the kind of the workpiece 4 and the drawn shape of the molding article.

Each of the wrinkle-preventing board pieces 31, 32, 33 and 34 may have a shape having arms T1 and T2 which have the same width and extend in the perpendicular direction to each other with the corner part 30 as a middle point along the outer periphery of the core 2 as shown for example, in Fig.1 (b).

In manufacturing the wrinkle-preventing board pieces 31, 32, 33 and 34, because all four pieces have the same L-shape, the pieces can be punched out from the board material so that the waste of the material becomes minimum. Thus, the costs of the materials can be reduced greatly.

Because the whole size of the wrinkle-preventing board pieces 31, 32, 33 and 34 of Example 1 is small as compared with the conventional picture frame-like wrinkle-preventing board 3 which is a single member. The finishing work to achieve the prescribed manufacturing accuracy of the wrinkle-preventing board can be reduced and the cost can be reduced as a whole.

In Example 1 shown in Fig.1, the arms in the X-axis direction are as long as the arms in the Y-axis direction. Thus, the wrinkle-preventing board pieces can be punched out from the material efficiently and the cost can be reduced.

Because the four wrinkle-preventing board pieces 31, 32, 33 and 34 can be set around the core 2 without considering position arrangement of the pieces, the setting work can be very easy.

As described above, the wrinkle-preventing board 3 of Example 1 can be manufactured at the low cost as well as can be easily handled when putting on the press device as compared with the conventional picture frame-like single member.

### Example 2

Fig.2 is a schematic diagram illustrating the drawing device to which Example 2 of the wrinkle-preventing board 3 used for the press device of the present invention is applied. Fig.2 (a) shows a side view and Fig.2 (b) shows a plan view illustrating the main parts of the second die 200 seen from above without the first die 100 and the workpiece 4 in Fig.2 (a). Note that the reference codes are the same as Fig.1.

In Example 2, the wrinkle-preventing board 3 is preferably used, when the shape of the core 2 of the second die 200 is not simple and the processed article has a complicated two-dimensional shape (the side wall) or a various shape in the depth direction (in the three-dimensional direction). In Fig.2 (b), the shape of the core 2 is shown by exaggerating the complexity described above to explain. Note that the process of the drawing is also the same as the Example 1.

Each of the wrinkle-preventing board pieces 31, 32, 33 and 34 of this wrinkle-preventing board 3 is shown to have an X-axis direction arm the length of which is different from a Y-axis direction arm. But at least one of these wrinkle-preventing board pieces 31, 32, 33 and 34 may have an X-direction arm the length of which is different from a Y-axis direction arm and the other wrinkle preventing board pieces may be the same as the wrinkle preventing board pieces in Example 1 described above.

In Example 2 shown in Fig.2 by appropriately selecting the length of the arms of the wrinkle-preventing board piece to be set on the corner part corresponding to the complicated shape part of the processed article, the generation of the wrinkles and the cracks can be suppressed or reduced.

Consequently, in Example 2 by preparing various wrinkle-preventing boards in advance to correspond to the predicted drawn shape of the processed article, the occurrence of the defective products can be suppressed and the processed article of good quality can be manufactured in addition to the advantageous effects in Example 1 aforementioned.

Note that the wrinkle-preventing board 3 of the present invention is more effective for dies that are relatively large. For example, the length of one side (one of four sides) of the core 2 from the corner to the corner is preferably not less than 1000 mm, more preferably not less than 1500 mm and further preferably not less than 2000 mm.

### Industrial Application

The present invention is described with Examples described above wherein the workpiece 4 is the fiber-reinforced resin material. But the present invention also can be applied for the drawing device for drawing the resin board and the glass composite board which have no fiber as the structure material, the metal board, the resin-metal composite board, the clad metal board and the like as the workpiece.

### Description of Code

1: Cavity
2: Core
3: Wrinkle-preventing Board
31, 32, 33, 34: Wrinkle-preventing Board Piece
4: Workpiece
5: Telescopic Member
6: Pressuring Mechanism
7: Device Stand
100: First Die
200: Second Die

## Claims

1. A wrinkle-preventing board used for a press device molding a fiber-reinforced resin prepreg into a drawn article having a desired shape by press molding with a pair of upper and lower dies including a first die having a cavity and a second die having a core, comprising
more than one wrinkle-preventing board pieces which are each arranged on outside of corner parts of the core, wherein each wrinkle-preventing board piece has a pair of arms extending to be perpendicular to each other and prevents generation of wrinkles on a side wall of the drawn article and break caused by thickness reduction.

2. The wrinkle-preventing board used for the press device according to Claim 1, wherein at least one wrinkle-preventing board piece is set so that a pressure for holding the prepreg with the wrinkle-preventing board and one of the dies can be adjusted individually.
